Europäisches Patentamt

European Patent Office

Office européen des brevets

(19)

(11) Veröffentlichungsnummer: **0 175 878**

**A2**

(12) # EUROPÄISCHE PATENTANMELDUNG

(21) Anmeldenummer: **85109329.4**

(51) Int. Cl.⁴: **C 04 B 35/52**

(22) Anmeldetag: **25.07.85**

(30) Priorität: **24.09.84 DE 3435044**

(43) Veröffentlichungstag der Anmeldung:
**02.04.86 Patentblatt 86/14**

(84) Benannte Vertragsstaaten:
**AT BE CH DE FR GB IT LI LU NL SE**

(71) Anmelder: **C. CONRADTY NÜRNBERG GmbH & Co. KG**
**Grünthal 1-6**
**D-8505 Röthenbach a.d. Pegnitz(DE)**

(72) Erfinder: **Schieber, Franz**
**Finkengasse 94**
**D-8505 Röthenbach a.d. Pegnitz(DE)**

(74) Vertreter: **Kern, Wolfgang, Dipl.-Ing.**
**Patentanwälte et al,**
**Dipl.-Ing. Herbert Tischer Dipl.-Ing. Wolfgang Kern**
**Dipl.-Chem. Dr. H.P. Brehm Albert-Rosshaupter-Strasse**
**65**
**D-8000 München 70(DE)**

(54) **Selbsttragender, formbeständiger Kohlenstoffverbundkörper und Verfahren zu seiner Herstellung.**

(57) Die Erfindung betrifft einen selbsttragenden, formbeständigen Kohlenstoffverbundkörper aus mehreren miteinander verbundenen Kohlenstoffschichten, sowie ein Verfahren zu seiner Herstellung. Ein solcher Kohlenstoffverbundkörper soll so ausgebildet werden, daß er extremen Anforderungen, insbesondere hinsichtlich seiner Formstabilität, Wärmedämmung und elektrischen Eigenschaften entspricht, wie sie auf dem Gebiete Hochtemperaturtechnik auftreten, und daß seine Gasdurchlässigkeit gezielt einstellbar ist. Dies wird erreicht durch eine oder mehrere Lagen Kohlenstoffilze und einen oder mehrere mit ersteren verklebte, dünne, blechartige polygranulare Kohlenstoffkörper, bestehend aus körnigen bzw. pulverigen und oder faserförmigen Kohlenstoffteilchen als Füllermaterialien und einem verkokten Bindemittel, welche Kohlenstoffkörper durch Einwirkung von Scherkräften aus einer plastischen Kohlenstoffmasse mit einem Bindemittelanteil von 50 bis 150 Gew.-%, bezogen auf das Füllermaterial, zu dünnen, plattenartigen Kohlenstofformkörpern geformt und einer ersten thermischen Behandlung und danach zusammen mit dem oder den kohlenstoffilzen zur Verfestigung des zwischen den Kohlenstoffkörpern und den mit ihnen zusammengebauten Kohlenstoffilzen angeordneten kohlenstoffhaltigen Bindemittels in der Konfiguration des Verbundkörpers einer zweiten thermischen Behandlung unterzogen worden sind.

Gemäß einer weiteren Möglichkeit kennzeichnet sich ein solcher selbsttragender, formbeständiger Kohlenstoffverbundkörper durch eine oder mehrere Lagen Kohlenstoffilze und einen oder mehrere mit ersteren verklebte, dünne, blechartige, polygranulare Kohlenstoffkörper, bestehend aus körnigen bzw. pulverigen und/oder faserförmigen Kohlenstoffteilchen als Füllermaterialien und einem verkokten Bindemittel, welcher Kohlenstoffkörper zunächst als dünner, plattenförmiger, grüner Körper durch Einwirkung von Scherkräften aus einer plastischen Kohlenstoffmasse mit einem Bindemittelgehalt von 50-150 Gew.-%, bezogen auf das Füllermaterial, hergestellt worden ist und danach mit einer oder mehreren Lagen Kohlenstoffilze zusammengebaut und zur Verfestigung des Bindemittels einer thermischen Behandlung unterworfen worden ist.

Fig. 5

EP 0 175 878 A2

Selbsttragender, formbeständiger Kohlenstoffverbundkörper und Verfahren zu seiner Herstellung

Die Erfindung betrifft einen selbsttragenden, formbeständigen Kohlenstoffverbundkörper aus mehreren miteinander
verbundenen Kohlenstoffschichten sowie ein Verfahren zu
seiner Herstellung.

Es sind selbsttragende Kohlenstoffverbundkörper bekannt.
Sie bestehen aus mehreren übereinandergestapelten Kohlenstoffilzlagen, die vor dem Aushärten und Verkoken punktweise mit einem kohlenstoffhaltigen Kitt verklebt werden.
Die Formstabilität solcher Verbundkörper läßt jedoch zu
wünschen übrig (DE-PS 11 71 837).

Bei einem anderen bekannten Kohlenstoffverbundkörper werden mehrere Kohlenstoffilzlagen auf ihren äußeren Oberflächen mit einem Bindemittel bestrichen, das dazu dient,
die einzelnen Lagen miteinander zu verkleben. Dabei dringt
das Bindemittel teilweise in den freien Porenraum des
Filzes ein, so daß die an der Oberfläche angrenzenden Poren
teilweise mit Bindemittel gefüllt werden, während die
weiter nach innen zu gelegenen Poren eine entsprechend
geringere Füllung erhalten. Die Kohlenstoffilzlagen werden
daher auch nicht gleichmäßig mit dem Bindemittel imprägniert, so daß eine inhomogene Verteilung im Kohlenstoff-
filzkörper vorliegt, die insbesondere in den Fällen, in
denen auf gute Wärmedämmung Wert gelegt wird, Nachteile
mit sich bringt (FR-PS 14 94 245).

Es sind ferner ein Kohlenstoffkörper hoher Porosität,
niedriger Rohdichte und Wärmeleitfähigkeit bekannt, der
aus ein- oder mehrlagigem Kohlenstoff- oder Graphitfilz
besteht, welcher mit einem kohlenstoffhaltigen Bindemittel
imprägniert und anschließend durch Einwirkung von Druck und Wärme verkokt bzw. graphitisiert worden ist, und der eine relativ geringe Rohdichte und hohe Formstabilität aufweist, wobei ein Teil des Bindemittels durch Abpressen, Auswalzen o.dgl. vor dem Verkoken bzw. Graphitisieren aus dem Filz entfernt worden ist (DE-PS 27 00 866). Dieser Kohlenstoffkörper hat zwar den Vorteil, daß er formstabil ist und eine relativ geringe Dichte und Wärmeleitfähigkeit aufweist, und sich außerdem in großen Abmessungen herstellen läßt, jedoch ist die bei diesen Produkten vorhandene durchgehende Porosität in manchen Fällen unerwünscht.

Die Aufgabe der Erfindung besteht deshalb darin, den selbsttragenden Kohlenstoffverbundkörper der genannten Art so auszubilden, daß er extremen Anforderungen insbesondere hinsichtlich seiner Formstabilität, Wärmedämmung und elektrischen Eigenschaften entspricht, wie sie auf dem Gebiete der Hochtemperaturtechnik, beispielsweise dem Kernreaktorbetrieb, und der Elektrochemie sowie beim Bau von Hochtemperaturtriebwerken auftreten, wobei darüber hinaus die Gasdurchlässigkeit des zu schaffender Kohlenstoffverbundkörpers gezielt einstellbar sein soll.

Diese Aufgabe wird gemäß einem Aspekt der Erfindung gelöst durch eine oder mehrere Lagen Kohlenstoffilze und einen oder mehrere mit ersteren verklebte, dünne, blechartige polygranulare Kohlenstoffkörper, bestehend aus körnigen bzw. pulverigen und/oder faserförmigen Kohlenstoffteilchen als Füllermaterialien und einem verkokten Bindemittel, welche Kohlenstoffkörper durch Einwirkung von Scherkräften aus einer plastischen Kohlenstoffmasse mit einem Bindemittelanteil von 50 bis 150 Gew.-%, bezogen auf das Füllermaterial, zu dünnen, plattenartigen Kohlenstofformkörpern geformt und einer ersten thermischen Behandlung und danach zusammen mit dem oder den Kohlenstoffilzen zur Verfestigung des zwischen den Kohlenstoffkörpern und den mit ihnen zusammengebauten Kohlenstoffilzen angeordneten kohlenstoffhaltigen Bindemittels in der Konfiguration des Verbundkörpers einer zweiten thermischen Behandlung unterzogen
worden sind.

Gemäß einem weiteren Aspekt der Erfindung wird diese
Aufgabe gelöst durch eine oder mehrere Lagen Kohlenstofffilze und einen oder mehrere mit ersteren verklebte, dünne,
blechartige, polygranulare Kohlenstoffkörper, bestehend aus
körnigen bzw. pulverigen und/oder faserförmigen Kohlenstoffteilchen als Füllermaterialien und einem verkokten Bindemittel, welcher Kohlenstoffkörper zunächst als dünner,
plattenförmiger, grüner Körper durch Einwirkung von Scherkräften aus einer plastischen Kohlenstoffmasse mit einem
Bindemittelgehalt von 50 - 150 Gew.-%, bezogen auf das
Füllermaterial, hergestellt worden ist und danach mit
einer oder mehreren Lagen Kohlenstoffilze zusammengebaut
und zur Verfestigung des Bindemittels einer thermischen
Behandlung unterworfen worden ist.

Der erfindungsgemäße Kohlenstoffverbundkörper setzt sich
demnach aus übereinandergeschichteten, im wesentlichen
planparallelen Lagen von Kohlenstoffilzen und wenigstens
einem plattenförmigen Kohlenstoffkörper besonderer Art
zusammen, der als dünn und blechartig bezeichnet wird, und
bei einer Ausführungsform der Erfindung, bei der nur eine
einzige Filzlage Verwendung findet, die beiden Oberflächen
dieser Filzlage abdeckt.

Der besonders geartete plattenförmige Kohlenstoffkörper
besteht aus einem Gemisch aus körnigen bzw. pulverigen
und/oder faserförmigen Kohlenstoffteilchen als Füllermaterialien, wie Koks, Ruß, Natur- oder Kunstgraphit oder
deren Mischungen, sowie einem kohlenstoffhaltigen Bindemittel, für das sich, gemäß einer weiteren Ausgestaltung
der Erfindung, Phenolformaldehydharz, Furanharz, Teer,
Pech oder deren Gemische besondere geeignet erweisen. Der Bindemittelgehalt beträgt 50 bis 150 Gew.-%, bezogen auf das Füllermaterial, und ist damit vergleichsweise hoch.

Dieser polygranulare Kohlenstoffkörper wird zu dem Kohlenstofformkörper als Teil des Verbundkörpers dadurch, daß aus körnigen bzw. pulverigen und/oder faserförmigen Kohlenstoffteilchen als Füllermaterialien und einem kohlenstoffhaltigen Bindemittel eine plastisch verformbare Kohlenstoffmasse hergestellt wird, die in einem Walzenspalt, welcher von unbeheizten Walzen gebildet wird, unter Einwirkung von Scherkräften bei Raumtemperatur zu einer folienartigen Platte ausgewalzt wird. Für den weiteren Herstellungsvorgang ergeben sich nun zwei Möglichkeiten. Einmal läßt sich die auf diese Weise ausgewalzte Platte zur Kondensierung und/oder Verkokung des Bindemittels einer thermischen Behandlung unterziehen und auf die dadurch geschaffene biegesteife und formbeständige, blechartige Platte entweder einzeln oder zu mehreren wenigstens eine Kohlenstoffilzschicht auflegen, die durch Verkleben mit der oder den Platten untrennbar verbunden wird.

Gemäß einer alternativen Verfahrensführung läßt sich das dünne, folienartig ausgewalzte Gebilde aus plastischer kohlenstoffmasse zunächst mit der oder den Kohlenstoffilzschichten zusammenbauen und danach als insoweit bereits vorhandener Verbundkörper der Temperaturbehandlung unterwerfen. Auch in diesem Fall wird eine untrennbare Verbindung zwischen der oder den Kohlenstoffilzschichten und dem blechartigen Kohlenstoffmaterial erreicht, wobei das in dem Kohlenstoffmaterial befindliche Bindemittel als Kleber dient, jedoch auch zusätzliches Bindemittel noch vor der Temperaturbehandlung auf die zu verklebenden Oberflächen aufgetragen werden kann.

Der schichtenartige oder sandwichartige Aufbau des erfindungsgemäßen Kohlenstoffverbundkörpers, bei dem die einzelnen Schichten aus-den gekennzeichneten unterschiedlichen Kohlenstoffmaterialien bestehen, bildet einen Wärmedämmkörper mit ausgezeichneten Dämmeigenschaften, die darauf zurückzuführen sind, daß die Kohlenstoffilzschichten aufgrund ihres Porenvolumens als gute Wärmeleitsperren wirken und die zwischen ihnen befindlichen blechartigen Kohlenstoffkörper, die trotz der Dämmwirkung der Kohlenstoffilze durch sie hindurchtretende Wärme gleichmäßig über die gesamte Oberfläche der nächstfolgenden Filzschicht verteilen, indem sie für eine rasche seitliche Ableitung der hindurchtretenden Wärme sorgen. Auf diese Weise werden sogenannte "Hot-Spots", also Stellen starker Überhitzung aufgrund von Wärmekonzentrationen, in einer Hochtemperaturdämmung, die aus derartigem Kohlenstoffverbundkörpermaterial besteht, vermieden.

Desweiteren dient der blechartige Kohlenstoffkörper auf oder zwischen den Kohlenstoffilzschichten auch als Gasdurchgangssperre, so daß in den Fällen, in denen nicht nur eine gute Wärmeisolierung, sondern auch ein Gasdurchgang durch dieselbe und die dadurch unter Umständen bewirkte Oxidation des Filzmaterials mit der Folge, daß dessen Isoliereigenschaften beeinträchtigt werden, vermieden werden soll, mit dem hier beschriebenen Kohlenstoffverbundkörper erhebliche Vorteile erreicht werden.

Der Kohlenstoffverbundkörper kann eine plattenförmige Konfiguration aufweisen, jedoch auch ringförmig gebogen sein, oder die Form eines Rohres aufweisen, und zwar in Anpassung an die jeweiligen Verwendungszwecke. Gemäß einer vorteilhaften Ausgestaltung der Erfindung sind die Kohlenstoffilzschichten vor dem Zusammenbau mit der oder den dünnen, blechartigen Kohlenstoffkörpern durch partielle Imprägnierung mit einem kohlenstoffhaltigen Bindemittel und anschließende Temperaturbehandlung formstabil gemacht worden, wobei auch in diesem Fall die oben erwähnten Bindemittel zur Anwendung gelangen können. Die partielle Imprägnierung, bei der ein Teil des Imprägniermittels, beispielsweise durch Abquetschen des Filzes, aus diesem wieder entfernt wird, so daß dessen Dichte sich verkleinert, ist ein Mittel zur Einstellung der Wärmeleitfähigkeit des Filzes und damit des gesamten Kohlenstoffverbundkörpers.

Es ist ferner die Möglichkeit gegeben, daß der Bindemittelgehalt der plastischen Kohlenstoffmasse, aus der der dünne, blechartige Kohlenstofformkörper erzeugt worden ist, etwa 100 Gew.-%, bezogen auf das Füllermaterial, beträgt. Der nach der Karbonisierung des Bindemittels in dem polygranularen Kohlenstoffkörper verbleibende Kohlenstoffrückstand liegt etwa bei 35 bis 70 Gew...

Für den dünnen, blechartigen Kohlenstoffkörper als Teil des erfindungsgemäßen Kohlenstoffverbundkörpers werden Füllermaterialien körniger bzw. pulveriger und/oder faserförmiger und/oder flockenförmiger Art verwendet, beispielsweise Kokse, Ruße, Natur- oder Kunstgraphite, Kohlenstoffasern oder deren Mischungen. Die Dicke des dünnen, blechartigen Kohlenstoffkörpers liegt zweckmäßigerweise zwischen 0,1 und 2,0 mm, und für das Verhältnis der Dicke der Kohlenstoffilzlagen zur Dicke der blechartigen Kohlenstoffkörper haben sich Werte von 20:1 bis 1:1 als besonders vorteilhaft erwiesen, was bedeutet, daß in aller Regel die Filzlagen eine größere Dicke aufweisen als die von dem Kohlenstofformkörper gebildete Materialschicht.

Für die Herstellung der Kohlenstoffilze, und zwar auch der partiell imprägnierten, sind Verfahren bekannt.

Es versteht sich, daß mit Hilfe der beiden oben genannten Verfahren zur Herstellung des Kohlenstoffverbundkörpers und ihren Varianten eine große Vielfalt von plattenförmigen Kohlenstoffverbundkörpern, was die Anzahl der einzelnen Schichten, ihre Anordnung innerhalb des Verbundkörpers, also ihre Lage in bezug aufeinander und ihre Dicke anbelangt, möglich ist, und daß durch Preßformung in Formpressen mit besonderen Preßwerkzeugen, die der Gestalt des herzustellenden Formlings entsprechen, oder in Furnierpressen auch an sich beliebige Kohlenstoffverbundkörper-Konfigurationen hergestellt werden können. So kann beispielsweise ein plattenförmiger Kohlenstoffverbundkörper im "grünen" Zustand, also dann, wenn er noch in gewissem Umfang plastisch verformt werden kann, weil das kohlenstoffhaltige Bindemittel noch nicht temperaturbehandelt worden ist, zu gewölbten Flächenteilen verformt werden, die nach der Temperaturbehandlung die geformte Konfiguration beibehalten.

In der Zeichnung sind einige Ausführungsbeispiele des erfindungsgemäßen Kohlenstoffverbundkörpers schematisch dargestellt.

Fig. 1 zeigt eine perspektivische Ansicht eines aus einer Kohlenstoffilzlage 3 mit beidseitig aufgeklebten planparallelen Kohlenstofformkörpern 1 und 2 bestehenden Isolationselementes.

In Fig. 2 ist eine perspektivische Ansicht eines Teils eines schalenförmig gekrümmten Kohlenstoffverbundkörpers zu sehen, der ebenfalls zu Isolationszwecken dienen könnte und, wie bei der Ausführungsform nach Fig. 1 aus einer mittleren Kohlenstoffilzschicht 6, die etwa 10 mm Dicke besitzt und zwei beidseitig aufgeklebten Kohlenstofformkörperschichten 4 und 5 besteht, deren Dicke etwa 1 mm beträgt.

Fig. 3 zeigt in perspektivischer Darstellung einen einlagigen rohrförmigen Hohlkörper 7, der von einem blechartigen Kohlenstofformkörper gebildet wird, also keine Kohlenstoffilzschicht besitzt und insofern keinen Schichtkörper, sondern nur die äußere oder innere Hülle eines solchen Schichtkörpers darstellt.

Fig. 4 zeigt eine perspektivische Ansicht eines Teils
eines aus fünf Schichten aufgebauten Kohlenstoffverbundkörpers, der beispielsweise für Hochtemperaturzwecke eingesetzt wird und aus drei
Filzschichten 8, 9, 10 und zwei kohlenstoff-
formkörperlagen 11,12 besteht, die zwischen den
Filzschichten eingebettet sind, mit denen sie
verklebt sind. Derartige plattenförmige Verbundkörper lassen sich in Abhängigkeit von den
technischen Herstellungsmöglichkeiten in an sich
beliebigen Größen herstellen, so beispielsweise
auch als relativ große Platten mit 700 x 2000 mm
Kantenlänge.

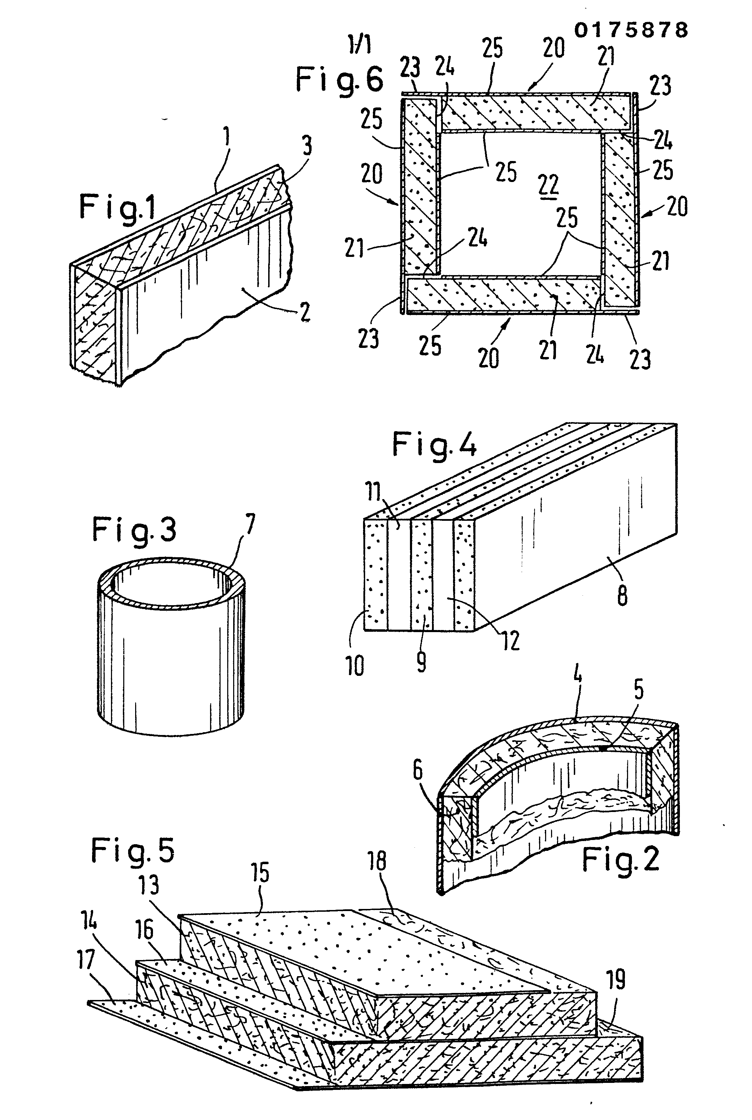

Weitere Beispiele für die vielfältigen Gestaltungs- und
damit auch Verwendungsmöglichkeiten, die der erfindungsgemäße Kohlenstoffverbundkörper bietet, zeigen die in den
Fig. 5 und 6 dargestellte Formen, wobei in

Fig. 5 eine perspektivische Ansicht eines mehrlagigen
Isolierkörpers mit gestuften Außenrändern zu
ersehen ist. Hier sind zwei planparallele Kohlenstoffilzschichten 13, 14 durch einen dünnen,
blechartigen Kohlenstofformkörper 16 getrennt
und auf ihrer Oberseite sowie auf ihrer Unterseite durch gleichartige formstabile Kohlenstofformkörper 15 und 17 in der Weise abgedeckt,
daß diese Formkörper auf der linken Seite über die
Ränder der Filzschichten um eine Strecke überstehen, die der Breite der unbedeckten Filzschichtoberflächen 18, 19 auf der rechten Seite
des Verbundkörpers entspricht. Die miteinander
verklebten Materialschichten oder -lagen 13, 14,
15, 16, 17 bilden auf diese Weise einen Nut- und
Federkörper, der sich mit gleichartigen Körpern
durch Zusammenstecken zu größeren Flächengebilden zusammenbauen läßt, ohne daß hierfür
besondere Verbindungselemente benötigt werden.

Die in Fig. 6 gezeigte Ausführungsform eines Kohlenstoffverbundkörpers zeigt in Draufsicht
einen aus vier plattenförmigen Verbundkörpern
20 zu einem Rechteckrohr zusammengesetzten
Hohlkörper, dessen innerer Hohlraum mit
22 bezeichnet ist. Die die Filzschicht 21
beidseitig abdeckenden blechartigen Kohlenstoffkörper 25 stehen auf der Außenseite
eines jeden Verbundkörpers 20 einseitig bei
23 über, um dadurch die Stirnseite des
sich rechtwinklig anschließenden Verbundkörpers abzudecken, während auf der Innenseite eines jeden Verbundkörpers, wie bei
24 gezeigt, eine Teilfläche nicht von dem
blechartigen Kohlenstoffkörper abgedeckt
ist, deren Breite der Stirnseite des rechtwinklig anstossenden weiteren Verbundkörpers
entspricht. Auf diese Weise entsteht ein
rechteckiges Rohr, dessen Außen- und Innenseiten vollständig von den blechartigen
Kohlenstoffkörpern abgedeckt sind, so daß
sich an den vier Stößen der vier Verbundkörper keine Hitzebrücken bilden.

Albert-Rosshaupter-Strasse 65   D 8000 Munchen 70   Telefon (089) 7605520   Telex 5214950 isard   Telegramme Kernpatent München

Con-7231

Ke/v

C. Conradty Nürnberg

GmbH & Co. KG

Grünthal 1 - 6

8505 Röthenbach a.d.Pegnitz

*1*

P a t e n t a n s p r ü c h e

1.   Selbsttragender, formbeständiger Kohlenstoffverbundkörper aus mehreren miteinander verbundenen Kohlenstoffschichten, g e k e n n z e i c h n e t  durch eine oder mehrere Lagen Kohlenstoffilze und einen oder mehrere mit ersteren verklebte, dünne, blechartige polygranulare Kohlenstoffkörper, bestehend aus körnigen bzw. pulverigen und/oder faserförmigen Kohlenstoffteilchen als Füllermaterialien und einem verkokten Bindemittel, welche Kohlenstoffkörper durch Einwirkung von Scherkräften aus einer plastischen Kohlenstoffmasse mit einem Bindemittelanteil von 50 bis 150 Gew.- , bezogen auf das Füllermaterial, zu dünnen, plattenartigen Kohlenstofformkörpern geformt und einer ersten thermischen Behandlung und danach zusammen mit dem oder den Kohlenstoffilzen zur Verfestigung des zwischen den Kohlenstoffkörpern und den mit ihnen zusammengebauten Kohlenstoffilzen angeordneten kohlenstoffhaltigen Bindemittels in der Konfiguration des Verbundkörpers einer zweiten thermischen Behandlung unterzogen  worden sind.

2. Selbsttragender, formbeständiger Kohlenstoffverbundkörper aus mehreren miteinander verbundenen Kohlenstoffschichten, g e k e n n z e i c h n e t  durch eine oder
mehrere Lagen Kohlenstoffilze und einen oder mehrere mit
ersteren verklebte, dünne, blechartige, polygranulare
Kohlenstoffkörper, bestehend aus körnigen bzw. pulverigen
und/oder faserförmigen Kohlenstoffteilchen als Füllermaterialien und einem verkokten Bindemittel, welcher Kohlenstoffkörper zunächst als dünner, plattenförmiger, grüner
Körper durch Einwirkung von Scherkräften aus einer plastischen Kohlenstoffmasse mit einem Bindemittelgehalt von
50 - 150 Gew.- , bezogen auf das Füllermaterial, hergestellt worden ist und danach mit einer oder mehreren Lagen
Kohlenstoffilze zusammengebaut und zur Verfestigung des
Bindemittels einer thermischen Behandlung unterworfen worden ist.

3. Kohlenstoffverbundkörper nach Anspruch 1 oder 2,
d a d u r c h  g e k e n n z e i c h n e t , daß als
Füllermaterial Kohlenstoffmaterialien, wie Koks, Ruß, Kohlenstoffasern, Natur- oder Kunstgraphit und deren Mischungen, eingebaut sind.

4. Kohlenstoffverbundkörper nach einem der Ansprüche
1 bis 3, d a d u r c h  g e k e n n z e i c h n e t ,
daß der Kohlenstoffverbundkörper aus einer Filzlage und
zwei diese beidseitig bedeckenden, dünnen, blechartigen
Kohlenstofformkörpern besteht.

5. Kohlenstoffverbundkörper nach einem der Ansprüche
1 bis 3, d a d u r c h  g e k e n n z e i c h n e t ,
daß die Kohlenstoffilzschichten und dünnen, blechartigen
Kohlenstofformkörper innerhalb des Kohlenstoffverbundkörpers sandwichartig einander abwechselnd angeordnet
sind.

6.  Kohlenstoffverbundkörper nach einem der Ansprüche 1 bis 5, d a d u r c h   g e k e n n z e i c h n e t , daß die Dicke der Kohlenstoffilzschicht größer ist als die Dicke des dünnen, blechartigen Kohlenstofformkörpers.

7.  Kohlenstoffverbundkörper nach einem der Ansprüche 1 bis 6, d a d u r c h   g e k e n n z e i c h n e t , daß der Kohlenstoffverbundkörper eine plattenförmige Konfiguration aufweist.

8.  Kohlenstoffverbundkörper nach einem der Ansprüche 1 bis 6, d a d u r c h   g e k e n n z e i c h n e t , daß der Kohlenstoffverbundkörper eine rohrförmige Konfiguration aufweist.

9.  Kohlenstoffverbundkörper nach einem der Ansprüche 1 und 3 bis 8, d a d u r c h   g e k e n n z e i c h n e t , daß die einzelnen Schichten durch ein Bindemittel, wie Phenolformaldehydharz, Furanharz, Teer, Pech oder deren Gemische, miteinander verklebt sind.

10. Kohlenstoffverbundkörper nach einem der Ansprüche 1 bis 9, d a d u r c h   g e k e n n z e i c h n e t , daß die Kohlenstoffilzschicht oder -schichten vor dem Zusammenbau  mit der oder den dünnen blechartigen Kohlenstofformkörpern durch partielle Imprägnierung mit einem kohlenstoffhaltigen Bindemittel und anschließende Temperaturbehandlung formstabil gemacht worden  sind.

11. Kohlenstoffverbundkörper nach einem der Ansprüche 1 bis 10, d a d u r c h   g e k e n n z e i c h n e t , daß als Bindemittel für den dünnen, blechartigen Kohlenstofformkörper Phenolformaldehydharze, Furanharze, Teere, Peche oder deren Gemische verwendet sind.

12. Kohlenstoffverbundkörper nach einem der Ansprüche 1 bis 11, d a d u r c h g e k e n n z e i c h n e t , daß der Bindemittelgehalt der plastischen Kohlenstoffmasse, aus der der dünne, blechartige Kohlenstofformkörper erzeugt worden ist, etwa 100 Gew.-%, bezogen auf das Füllermaterial, beträgt.

13. Kohlenstoffverbundkörper nach einem der Ansprüche 1 bis 12, d a d u r c h g e k e n n z e i c h n e t , daß nach der Temperaturbehandlung das Bindemittel einen kohlenstoffrückstand von 35 bis 70 Gew.- aufweist.

14. Kohlenstoffverbundkörper nach einem der Ansprüche 1 bis 13, d a d u r c h g e k e n n z e i c h n e t , daß die Dicke des dünnen, blechartigen Kohlenstofformkörpers zwischen 0,1 und 2,0 mm beträgt.

15. Kohlenstoffverbundkörper nach einem der Ansprüche 1 bis 14, d a d u r c h g e k e n n z e i c h n e t , daß das Verhältnis der Dicke der Kohlenstoffilzlagen zur Dicke der dünnen, blechartigen Kohlenstofformkörper 20:1 bis 1:1 beträgt.

16. Verfahren zur Herstellung des Kohlenstoffverbundkörpers nach einem der Ansprüche 1 und 3 bis 15, d a - d u r c h g e k e n n z e i c h n e t , daß aus körnigen bzw. pulverigen und/oder faserförmigen Kohlenstoffteilchen als Füllermaterialien und einem kohlenstoffhaltigen Bindemittel eine plastisch verformbare Kohlenstoffmasse hergestellt wird, die in einem Walzenspalt, der von unbeheizten Walzen gebildet wird, unter Einwirkung von Scherkräften bei Raumtemperatur zu einer folienartigen Platte geformt wird, welche zur Kondensierung und/oder Verkokung des Bindemittels einer thermischen Behandlung unterzogen wird, und daß auf die dadurch gebildete blechartige Platte entweder einzeln oder zu mehreren wenigstens eine Kohlenstoffilzschicht aufgelegt wird, die durch Verkleben mit der Platte untrennbar verbunden wird.

17. Verfahren zur Herstellung des Kohlenstoffverbundkörpers nach einem der Ansprüche 2 bis 15, d a d u r c h g e k e n n z e i c h n e t , daß aus körnigen bzw. pulverigen und/oder faserförmigen Kohlenstoffteilchen als Füllermaterialien und einem kohlenstoffhaltigen Bindemittel eine plastisch verformbare Kohlenstoffmasse hergestellt wird, die in einem Walzenspalt, welcher von unbeheizten Walzen gebildet wird, unter Einwirkung von Scherkräften bei Raumtemperatur zu einer folienartigen Platte geformt wird, auf die entweder einzeln oder zu mehreren wenigstens eine Kohlenstoffilzschicht aufgelegt wird, und daß dieser Schichtkörper zur Kondensierung und/oder Verkokung des Bindemittels einer Temperaturbehandlung unterworfen wird, durch die die einzelnen Schichten untrennbar miteinander verklebt werden.

18. Verfahren nach Anspruch 16 oder 17, d a d u r c h g e k e n n z e i c h n e t , daß die Berührungsoberflächen der Kohlenstoffilzschichten mit den plattenförmigen Kohlenstoffkörpern vor der Temperaturbehandlung zusätzlich mit Bindemittel beaufschlagt werden.

19. Verfahren nach einem der Ansprüche 16 bis 18, d a d u r c h g e k e n n z e i c h n e t , daß die Temperaturbehandlung unter erhöhtem Druck stattfindet.

20. Verfahren nach einem der Ansprüche 16 bis 19, d a d u r c h g e k e n n z e i c h n e t , daß der Stapel aus einem oder mehreren dünnen, plattenförmigen oder blechartigen Kohlenstoffkörpern und einem oder mehreren planparallelen Kohlenstoffilzen durch eine furnierpressenartige Vorrichtung zusammengepreßt wird.

0175878

Fig.1

Fig.6

Fig.3

Fig.4

Fig.2

Fig.5